Europäisches Patentamt

European Patent Office

Office européen des brevets

(19)

(11) **EP 1 215 839 B1**

(12) **FASCICULE DE BREVET EUROPEEN**

(45) Date de publication et mention
de la délivrance du brevet:
**04.10.2006 Bulletin 2006/40**

(51) Int Cl.:
*H04L 5/02* (2006.01)    *H04L 25/03* (2006.01)

(21) Numéro de dépôt: **01403223.9**

(22) Date de dépôt: **12.12.2001**

(54) **Méthode et dispositif de détection multi-utilisateur**

Verfahren und Vorrichtung zur Mehrbenutzererkennung

Method and Device for Multi-user Detection

(84) Etats contractants désignés:
**AT BE CH CY DE DK ES FI FR GB GR IE IT LI LU
MC NL PT SE TR**

(30) Priorité: **13.12.2000 FR 0016351**

(43) Date de publication de la demande:
**19.06.2002 Bulletin 2002/25**

(73) Titulaire: **Mitsubishi Electric Information
Technology Centre
Europe B.V.
1119 NS Schiphol Rijk (NL)**

(72) Inventeur: **Brunel, Loic,
Mitsubishi Electricité
35700 Rennes (FR)**

(74) Mandataire: **Maillet, Alain
SCP Le Guen & Maillet,
5, Place Newquay,
B.P. 70250
35802 Dinard Cedex (FR)**

(56) Documents cités:
**EP-A- 0 465 851**

- **NAHM S ET AL: "TIME-DOMAIN EQUALIZATION
FOR THE ORTHOGONAL MULTI-CARRIER CDMA
SYSTEMS" IEEE GLOBECOM 1996: THE KEY TO
GLOBAL PROSPERITY, vol. 3, 18 novembre 1996
(1996-11-18), pages 1583-1587, XP000748718
NEW YORK, NY, USA ISBN: 0-7803-3337-3**
- **HELARD J F ET AL: "LINEAR MMSE DETECTION
TECHNIQUE FOR MC-CDMA" ELECTRONICS
LETTERS, IEE STEVENAGE, GB, vol. 36, no. 7, 30
mars 2000 (2000-03-30), pages 665-666,
XP000936982 ISSN: 0013-5194**
- **JUNG P ET AL: "A GENERALIZED VIEW ON
MULTICARRIER CDMA MOBILE RADIO
SYSTEMS WITH JOINT DETECTION (PART II).
EINE VERALLGEMEINERTE DARSTELLUNG
VON MOBILFUNKKONZEPTEN MIT
MULTITRAEGER-CDMA UND GEMEINSAMER
DETEKTION (TEIL II)" FREQUENZ, SCHIELE UND
SCHON GMBH. BERLIN, DE, vol. 51, no. 11/12, 1
novembre 1997 (1997-11-01), pages 270-275,
XP000765910 ISSN: 0016-1136**
- **KLEIN A ET AL: "Simultaneous cancellation of
cross interference and ISI in CDMA mobile radio
communications" PIMRC '92: THE THIRD IEEE
INTERNATIONAL SYMPOSIUM ON PERSONAL,
INDOOR AND MOBILE RADIO
COMMUNICATIONS PROCEEDINGS (CAT. NO.
92TH0488-7), pages 118-122, XP002179045 1992,
NEW YORK, NY, USA ISBN: 0-7803-0841-7**

**Description**

La présente invention concerne une méthode et un dispositif de détection multi-utilisateur. Plus particulièrement, la présente invention concerne une méthode et un dispositif de détection multi-utilisateur à maximum de vraisemblance pour un système de télécommunication MC-CDMA (*Multi-Carrier Code Division Multiple Access*).

L'accès multiple à répartition par codes sur porteuses multiples (MC-CDMA pour *Multi-Carrier Code Division Multiple Access*) combine la modulation OFDM (*Orthogonal Frequency Division Multiplex)* et la technique d'accès multiple CDMA. Cette technique d'accès multiple a été proposée pour la première fois par N. Yee et al. dans l'article intitulé « Multicarrier CDMA in indoor wireless radio networks » paru dans Proceedings of PIMRC '93, Vol. 1, pages 109-113, 1993. Les développements de cette technique ont été passés en revue par S. Hara et al. dans l'article intitulé « Overview of multicarrier CDMA » publié dans IEEE Communication Magazine, pages 126-133, Décembre 1997.

Contrairement à la méthode DS-CDMA *(Direct Sequence Code Division Multiple Access)* dans laquelle le signal de chaque utilisateur est multiplié dans le domaine temporel pour étaler son spectre fréquentiel, la signature multiplie ici le signal dans le domaine fréquentiel, chaque élément de la signature multipliant le signal d'une sous-porteuse différente.

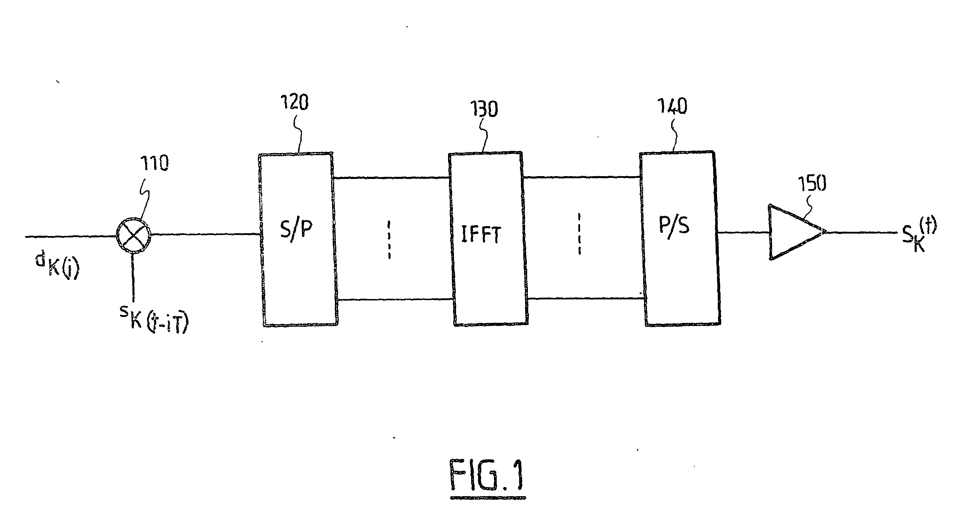

Plus précisément la Fig. 1 représente la structure d'un émetteur MC-CDMA pour un utilisateur $k$ donné. Soit $d_k(i)$ le ième symbole à émettre de l'utilisateur $k$

où $d_k(i)$ appartient à l'alphabet de modulation. Le symbole $d_k(i)$ est tout d'abord multiplié en 110 par une séquence d'étalement ou signature de l'utilisateur, notée $c_k(t)$, constituée de $N_c$ « chips », chaque « chip » étant de durée $T_c$, la durée totale de la séquence d'étalement correspondant à une période symbole $T$. Les résultats de la multiplication du symbole $d_k(i)$ par les différents « chips » sont convertis par le convertisseur série / parallèle 120 en un bloc de $L$ symboles, où $L$ est en général un multiple de $N_c$. Nous considèrerons, pour des raisons de simplification de présentation, que $L = N_c$. Le bloc de $L$ symboles est ensuite soumis à une FFT inverse dans le module 130 avant d'être transmis au convertisseur parallèle / série 140. Afin d'éviter l'interférence inter-symbole, un intervalle de garde, de longueur supérieure à la durée de la réponse impulsionnelle du canal de transmission, est adjoint au symbole MC-CDMA. Cet intervalle est obtenu par l'adjonction (non représentée) d'un suffixe choisi identique au début dudit symbole. Le symbole ainsi obtenu est amplifié en 150 avant d'être transmis sur le canal de l'utilisateur. On voit donc que la méthode MC-CDMA s'analyse en un étalement dans le domaine spectral (avant IFFT) suivi d'une modulation OFDM.

En pratique, l'utilisateur $k$ transmet ses données sous forme de trames de $N$ symboles, chaque symbole $d_k(i)$ étant étalé par une signature réelle $c_k(t)$ de durée égale à la période symbole $T$, telle que $c_k(t)=0$ si $t \notin [0,T]$. Le signal modulé à l'instant $t=i.T+n.Tc$ peut alors s'écrire, si l'on omet les intervalles de garde entre symboles MC-CDMA :

$$S_k(t)=\sum_{i=0}^{N-1}\sum_{n=0}^{L-1} a_k.d_k(i).c_k(n.T_c).\exp(j.2\pi n/N_c) \qquad (1)$$

où $a_k$ est l'amplitude du signal transmis par l'utilisateur $k$.

Si l'on se place maintenant au niveau d'une station de base transmettant des symboles vers $K$ utilisateurs, le signal modulé résultant peut s'exprimer simplement comme :

$$S(t)=\sum_{k=1}^{K}\sum_{i=0}^{N-1}\sum_{n=0}^{N_c-1} a_k.d_k(i).c_{kn}.\exp(j.2\pi n/N_c) \qquad (2)$$

où l'on a noté $c_{kn}=c_k(n.T_c)$

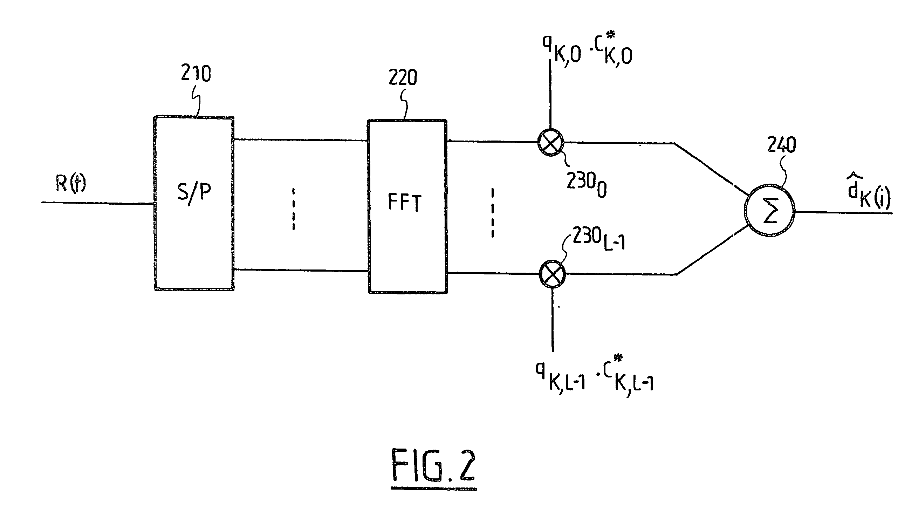

Un récepteur MC-CDMA pour un utilisateur $k$ donné a été illustré schématiquement en Fig. 2.

Le signal reçu démodulé est échantillonné à la fréquence « chip» et les échantillons appartenant à l'intervalle de garde sont supprimés (suppression non représentée). Le signal obtenu peut s'écrire :

$$R(t)=\sum_{k=1}^{K}\sum_{i=0}^{N-1}\sum_{n=0}^{L-1} a_k.d_k(i).c_{kn}.h_{kn}(i).\exp(j.2\pi n/N_c)+\eta(t) \qquad (3)$$

où $h_{kn}(i)$ traduit la réponse du canal de l'utilisateur $k$ à la fréquence de la sous-porteuse $n$ du symbole MC-CDMA émis au temps $i.$ $T$ et $\eta(t)$ est le bruit reçu.

Les échantillons ainsi obtenus sont parallélisés dans un convertisseur série / parallèle 210 avant de subir une FFT dans le module 220. Les échantillons dans le domaine fréquentiel, en sortie de 220, sont égalisés et désétalés par la signature de l'utilisateur $k$. Pour ce faire, les échantillons du domaine fréquentiel sont multipliés par les coefficients $q_{kn}(i).c^*_{kn}$ dans les multiplieurs $230_0,..,230_{Nc-1}$ puis sommés en 240 pour fournir un symbole de sortie $dk(i)$.

Différentes possibilités d'égalisation ont été envisagées dans l'état de la technique dont notamment la combinaison MRC (*Maximum Ratio Combining*) définie par l'emploi des coefficients $q_{kn}(i)= h^*_{kn}(i)$ ou. * est l'opération de conjugaison .

Le récepteur illustré en Fig. 2 ne permet de décoder que les données d'un seul utilisateur $k$. Or il est souvent avantageux de procéder à un décodage des données transmises pour l'ensemble des $K$ utilisateurs, ce afin d'estimer et d'éliminer les interférences entre les différents canaux de transmission. Les techniques de détection multi-utilisateur et de détection conjointe ont été également envisagées pour la méthode MC-CDMA. Par exemple l'article de S. Kaiser et al. intitulé « Multi-carrier CDMA with iterative decoding and soft-interference cancellation» publié dans GLOBECOM '97 en pages 6-10, 1997, propose une méthode de détection conjointe avec suppression parallèle des interférences (PIC pour *Parallel Interference Cancellation*). Toutefois, cette technique de détection ne fournit pas nécessairement la solution optimale en terme de maximum de vraisemblance. En outre, l'application directe d'une technique de détection à maximum de vraisemblance à un contexte multi-utilisateur conduirait à une complexité prohibitive.

Le but de la présente invention est de proposer une méthode et un dispositif de détection multi-utilisateur dans le cadre d'une transmission MC-CDMA qui ne présente pas les inconvénients des techniques susmentionnées.

A cette fin, la présente invention est définie par une méthode de détection d'une pluralité de symboles ($\mathbf{d}_K(i)$) transmis par ou pour une pluralité $K$ d'utilisateurs, chaque symbole appartenant à une constellation de modulation et faisant l'objet d'un étalement spectral avant d'être modulé sur une pluralité $L$ de porteuses, ladite méthode comprenant une étape de démodulation et une étape de désétalement spectral du signal reçu ($\mathbf{r}(i)$) pour fournir un vecteur ($\mathbf{y}(i)$, $\tilde{\mathbf{y}}(i)$,$\mathbf{y_2}(i)$, $\tilde{\mathbf{y}}2(i)$) caractéristique dudit signal, ladite méthode comprenant en outre une étape de recherche, à l'intérieur d'un réseau de points ($\Lambda,\Omega,\Lambda_2,\Omega_2$) généré par les symboles desdites constellations de modulation, d'au moins le plus proche voisin dudit vecteur.

Avantageusement, ladite étape de recherche est limitée à un ensemble de points du réseau appartenant à une zone prédéterminée autour du vecteur reçu.

Alternativement, ladite étape de recherche est limitée à un ensemble de points du réseau appartenant à une zone prédéterminée autour de l'origine dudit réseau.

Ladite zone prédéterminée sera préférablement déterminée par une sphère.

Si les symboles transmis ont été étalés spectralement au moyen de séquences à valeurs réelles, ledit vecteur complexe pourra être décomposé en un premier vecteur à composantes réelles et un second vecteur à composantes réelles. Ladite étape de recherche consiste alors à déterminer le plus proche voisin dudit premier vecteur et dudit second vecteur à l'intérieur d'un réseau ($\Lambda,\Omega$) de points à coordonnées réelles de dimension $K$

Dans le cas général, ledit vecteur complexe étant considéré comme un vecteur à composantes réelles de taille $2.K,$ ladite étape de recherche consiste à déterminer le plus proche voisin à l'intérieur d'un réseau ($\Lambda_2,\Omega_2$) de points à coordonnées réelles de dimension $2.K$. L'étape de recherche est avantageusement effectuée sur une pluralité de composantes réelles dudit vecteur complexe, la recherche étant limitée pour chacune desdites composantes à un intervalle défini par une borne inférieure et une borne supérieure, lesdites bornes étant choisies de manière à ce que ledit intervalle ne comprenne pas des points relatifs à des symboles ne pouvant appartenir à la constellation de modulation.

Selon un mode de réalisation de l'invention, l'étape de démodulation spectrale est suivie d'une étape de désétalement et d'égalisation des symboles obtenus par démodulation du signal reçu aux différentes porteuses, ladite fournissant un vecteur ($\mathbf{y}(i)$, $\mathbf{y_2}(i)$) de symboles égalisés pour les différents utilisateurs.

Avantageusement, ledit vecteur caractéristique ($\tilde{\mathbf{y}}(i)$, $\tilde{\mathbf{y}}_2(i)$) est obtenu à partir du vecteur de symboles égalisés au moyen d'un traitement matriciel visant à substantiellement décorréler les différentes composantes de bruit de ce dernier .

Selon une variante, ladite étape de recherche est étendue à celle d'un ensemble de points voisins dudit vecteur caractéristique et les symboles transmis sont estimés de manière souple à partir des symboles générant lesdits points voisins et des distances séparant lesdits points voisins du point reçu.

L'invention est définie également par un dispositif de détection d'une pluralité de symboles ($\mathbf{d}_K(i)$) transmis par ou pour une pluralité $K$ d'utilisateurs, chaque symbole appartenant à une constellation de modulation et faisant l'objet d'un étalement spectral avant d'être modulé sur une pluralité $L$ de porteuses, le dispositif comprenant des moyens pour mettre en oeuvre la méthode exposée ci-dessus.

Un tel dispositif de détection peut être utilisé dans un système de télécommunication mobile MC-CDMA.

Les caractéristiques de l'invention mentionnées ci-dessus, ainsi que d'autres, apparaîtront plus clairement à la lecture de la description suivante faite en relation avec les figures jointes, parmi lesquelles :

La Fig. 1 représente de manière schématique la structure d'un émetteur MC-CDMA connu de l'état de la technique ;
La Fig. 2 représente de manière schématique la structure d'un récepteur MC-CDMA mono-utilisateur ;
La Fig. 3 représente un réseau de points utile à la méthode de détection selon l'invention ;
La Fig. 4 représente de manière schématique la structure d'un récepteur MC-CDMA multi-utilisateur selon un mode de réalisation de l'invention.

L'idée à la base de l'invention est d'effectuer une détection multi-utilisateur MC-CDMA au moyen d'une représentation par réseau de points. Considérons à nouveau un système de télécommunication MC-CDMA et intéressons nous au signal reçu à l'instant $i$ sur les $L$ différentes sous-porteuses du signal OFDM. Nous supposerons à nouveau que le nombre de sous-porteuses est égal au facteur d'étalement. Soit $\mathbf{r}(i) = (r_1(i),...,r_L(i))$ le vecteur des signaux reçus sur les différentes sous-porteuses et $\mathbf{d}(i) = (d_1(i),...,d_K(i))$ le vecteur des $K$ symboles émis à l'instant $i$. On peut écrire $\mathbf{C}$ la matrice des $K$ séquences d'étalement de longueur $L$ :

$$\mathbf{C} = \begin{bmatrix} c_{11} \cdots c_{1L} \\ \vdots \qquad \vdots \\ c_{K1} \cdots c_{KL} \end{bmatrix}$$

Si l'on se place dans le cas de la liaison descendante, un seul canal de transmission est à prendre en compte. On supposera que le canal est non sélectif en fréquences sur chaque sous-porteuse $\ell$ et perturbé par un bruit blanc additif gaussien. La fonction de transfert du canal à l'instant $i$ peut être représentée par $L$ coefficients complexes $h_\ell(i)$, $\ell = 1,..,L$. Ces coefficients sont regroupés dans la matrice diagonale $\mathbf{H} = \mathbf{Diag}(h_1(i),...,h_L(i))$. L'équation (3) donnant le signal reçu s'exprime sous forme matricielle :

$$\mathbf{r}(i) = \mathbf{d}(i)\mathbf{AC}(i)\mathbf{H}(i) + \eta(i) \tag{4}$$

où $\eta(i) = (\eta_1(i),..., \eta_L(i))$ est le vecteur de bruit blanc additif gaussien et $\mathbf{A}$ la matrice diagonale $\mathbf{Diag}(a_1,...,a_K)$ formée par les amplitudes pour les différents utilisateurs.

Dans la liaison montante, le signal en provenance de chaque utilisateur traverse un canal différent. On supposera comme ci-dessus que les canaux sont non sélectifs en fréquences sur chaque sous-porteuse $\ell$. L'étalement et l'effet du canal peuvent alors être combinés dans une matrice $\mathbf{C}_U(i)$ :

$$\mathbf{C}_U(i) = \begin{bmatrix} c_{11}h_{11}(i) & \cdots & c_{1L}h_{1L}(i) \\ \vdots & & \vdots \\ c_{K1}h_{K1}(i) & \cdots & c_{KL}h_{KL}(i) \end{bmatrix}$$

Dans l'hypothèse où tous les utilisateurs sont reçus de façon synchrone, le signal reçu peut alors s'écrire :

$$\mathbf{r}(i) = \mathbf{d}(i)\mathbf{AC}_U(i) + \eta(i) \tag{5}$$

On cherche le symbole émis au sens du maximum de vraisemblance, c'est-à-dire le vecteur $\mathbf{d}(i)$ des $K$ symboles émis tel que l'écart quadratique :

$$D^2(\mathbf{d}) = \left\| \mathbf{r}(i) - \mathbf{d}(i)\mathbf{AC}_U(i) \right\|^2 \tag{6}$$

soit minimal.

De manière équivalente on peut minimiser l'expression :

$$D_K^2(\mathbf{d})=\left\|\mathbf{d}(i)\mathbf{A}\mathbf{C}_U(i)\right\|^2-2\mathrm{Re}\langle\mathbf{d}(i)\mathbf{A}\mathbf{C}_U(i);\mathbf{r}(i)\rangle \qquad (7)$$

le produit scalaire peut encore s'écrire:

$$\langle\mathbf{d}(i)\mathbf{A}\mathbf{C}_U(i);\mathbf{r}(i)\rangle=\sum_{\ell=1}^{L}\sum_{k=1}^{K}a_k d_k^*(i)c_{k\ell}^*(i)h_{k\ell}^*(i)r(i)=\sum_{k=1}^{K}a_k d_k^*(i)\sum_{\ell=1}^{L}c_{k\ell}^*(i)h_{k\ell}^*(i)r(i)=\sum_{k=1}^{K}a_k d_k^*(i)y_k(i)$$

où l'on a défini :

$$y_k(i)\overset{\Delta}{=}\sum_{\ell=1}^{L}c_{k\ell}^*(i)h_{k\ell}^*(i)r(i) \qquad (8)$$

La connaissance du vecteur *d'observation* $\mathbf{y}(i) = (y_1(i), \dots y_K(i))$ est suffisante pour permettre la détection au sens du maximum de vraisemblance du vecteur émis $\mathbf{b}(i)$. L'observation $\mathbf{y}(i)$ peut s'écrire matriciellement à partir de l'équation (8)

$$\mathbf{y}(i)=\mathbf{r}(i)\mathbf{C}_U^{H}(i) \qquad (9)$$

ou $\bullet^H$ désigne la transposée hermitienne.

Pour une liaison descendante, on peut définir de manière similaire, à la différence que l'on peut factoriser la matrice $\mathbf{C}$ en une matrice de canal et une matrice d'étalement:

$$\mathbf{y}(i)\overset{\Delta}{=}\mathbf{r}(i)\mathbf{C}_D^{H}(i) \ \ \text{avec} \ \ \mathbf{C}_D(i)=\mathbf{C}(i)\mathbf{H}(i) \qquad (10)$$

On remarquera que l'expression (8) ou de manière équivalente (9) ou (10) n'est autre qu'une opération de filtrage adaptée à la signature et au canal relatifs à chaque utilisateur $k$. Elle peut être considérée comme une combinaison MRC (Maximum Ratio Combining) des différents symboles reçus.

Alternativement, tout en conservant le désétalement spectral on pourra utiliser, un procédé d'égalisation autre que la combinaison MRC. Ainsi, en lieu et place des coefficients $h_{k\ell}^*(i)$ dans l'équation (9), les coefficients $q_{k,\ell}(i)=\dfrac{h_{k\ell}^*(i)}{\left|h_{k\ell}(i)\right|}$

(Equal Gain Combining) ou bien encore $q_{k,\ell}(i)=\dfrac{h_{k\ell}^*(i)}{\left|h_{k\ell}(i)\right|^2}$ (Orthogonality Restoration Combining) pourront être employés. Toutefois, pour des raisons de simplification de présentation nous supposerons dans la suite que $q_{k,\ell}(i)=h_{k\ell}^*(i)$.

En remplaçant l'expression (5) dans (9), on obtient l'expression du vecteur d'observation $\mathbf{y}(i)$ en fonction du vecteur des symboles émis $\mathbf{d}(i)$ pour la liaison montante :

$$\mathbf{y}(i)=\mathbf{d}(i)\mathbf{A}\mathbf{C}_U(i)\mathbf{C}_U^{H}(i)+\mathbf{n}(i) \ \ \text{soit encore} \ \ \mathbf{y}(i)=\mathbf{d}(i)\mathbf{M}(i)+\mathbf{n}(i) \qquad (11)$$

avec

$$\mathbf{M}(i) = \mathbf{A}\mathbf{C}_U(i)\mathbf{C}_U{}^H(i) \tag{12}$$

Bien entendu, l'expression (11) s'applique également à la liaison descendante à condition de prendre :

$$\mathbf{M}(i) = \mathbf{A}\mathbf{C}_D(i)\mathbf{C}_D{}^H(i) \tag{13}$$

Nous démontrerons ci-après que $\mathbf{y}(i)$ tel que donné par l'équation (11) peut être vu comme un point d'un réseau $\Lambda_2$ de dimension $2K$, de matrice génératrice complexe $\mathbf{M}(i) = \mathbf{A}\mathbf{C}_U(i)\mathbf{C}_U{}^H(i)$ corrompu par un bruit $\mathbf{n}(i) = (n_1(i),...,n_K(i))$ tel que :

$$n_k(i) = \sum_{\ell=1}^{L} c_{k\ell}{}^*(i) h_{k\ell}{}^*(i) \eta_\ell(i) \tag{14}$$

Nous appellerons réseau réel de points A de dimension $K$ tout ensemble de vecteurs de $\mathbf{R}^K$ vérifiant :

$$\mathbf{x} = b_1\mathbf{v}_1 + b_2\mathbf{v}_2 + \ldots + b_K\mathbf{v}_K \text{ où } b_i \in \mathbf{Z}, \forall i = 1,\ldots,K$$

où $\{\mathbf{v}_1,\mathbf{v}_2,...,\mathbf{v}_K\}$ est une base sur $\mathbf{R}^K$.
Les points du réseau forment un sous-groupe abélien additif de $\mathbf{R}^K$, c'est d'ailleurs le plus petit sous-groupe de $\mathbf{R}^K$ contenant les vecteurs $\{\mathbf{v}_1, \mathbf{v}_2,...,\mathbf{v}_K\}$ et un $\mathbf{Z}$-module de $\mathbf{R}^K$. Ces vecteurs de base forment les lignes de la matrice génératrice $\mathbf{G}$ du réseau. On peut donc écrire

$$\mathbf{x} = \mathbf{b}\mathbf{G} \text{ où } \mathbf{b} = \left(b_1,\ldots,b_K\right) \in \mathbf{Z}^K . \tag{15}$$

La région délimitée par les vecteurs de base est appelée parallélotope fondamental et son volume, noté vol $(\Lambda)$ ou $\det(\Lambda)$, est nommé volume fondamental. Ce volume fondamental n'est autre que le module du produit vectoriel des $K$ vecteurs de base et est donc égal à $|\det(\mathbf{G})|$ où det désigne le déterminant. S'il existe plusieurs choix possibles pour la matrice génératrice d'un même réseau, il n'existe par contre qu'une unique valeur pour le volume fondamental.
La région de Voronoï V ou cellule de Dirichlet d'un point $\mathbf{x}$ appartenant au réseau est l'ensemble des points de $\mathbf{R}^K$ plus proches de $\mathbf{x}$ que de tout autre point du réseau. Le volume de cette région est égal au volume fondamental.
Le rayon d'empilement $\rho$ du réseau est le rayon de la plus grande sphère inscrite dans la région de Voronoï et le rayon de recouvrement celui de la plus petite sphère circonscrite à cette même région. Le rayon d'empilement est donc le rayon des sphères dont l'empilement constitue le réseau de points et le rayon de recouvrement est celui des sphères les plus petites qui, centrées sur les points du réseau, permettent de recouvrir tout l'espace $\mathbf{R}^K$. La densité du réseau est le rapport entre le volume de la sphère de rayon $\rho$ et le volume fondamental. Enfin, le coefficient d'erreur (kissing number) $\tau(\Lambda)$ du réseau est le nombre de sphères tangentes à une même sphère dans l'empilement ou, en d'autres termes, le nombre de voisins d'un point du réseau, situés à la distance minimale $d_{Emin} = 2\rho$.
Nous appellerons réseau complexe de points (ou réseau sur $\mathbf{C}$) de dimension $K$ tout ensemble de vecteurs $\mathbf{x}$ tels que $\mathbf{x} = \mathbf{b}\mathbf{G}$ où $\mathbf{b} = \mathbf{b}^R + j.\mathbf{b}^I$ avec $\mathbf{b}^R, \mathbf{b}^I \in \mathbf{Z}^K$ et où $\mathbf{G}$ est une matrice à coefficients complexes de rang $K$. Comme nous allons le montrer, un réseau de dimension $K$ sur $\mathbf{C}$ peut être vu comme un réseau réel de dimension $2K$ sur $\mathbf{R}$.
Les vecteurs $\mathbf{y}(i)$, $\mathbf{d}(i)$, $\mathbf{n}(i)$ ainsi que la matrice $\mathbf{M}(i)$ figurant dans l'équation (11) sont à composantes complexes. La relation (11) peut encore s'écrire sous la forme réelle équivalente:

$$\mathbf{y}_2(i) = \mathbf{d}_2(i)\mathbf{M}_2(i) + \mathbf{n}_2(i) \tag{16}$$

avec :

$\mathbf{y}_2(i)=\left(y_1^R(i),y_1^I(i),\ldots,y_K^R(i),y_K^I(i)\right)$ où $y_k^R(i),y_k^I(i)$ sont respectivement la partie réelle et la partie imaginaire du symbole $y_k(i)$ ;

$\mathbf{d}_2(i)=\left(d_1^R(i),d_1^I(i),\ldots,d_K^R(i),d_K^I(i)\right)$ où $d_k^R(i),d_k^I(i)$ sont respectivement la partie réelle et la partie imaginaire du symbole $d_k(i)$;

$\mathbf{n}_2(i)=\left(n_1^R(i),n_1^I(i),\ldots,n_K^R(i),n_K^I(i)\right)$ où $n_k^R(i),n_k^I(i)$ sont respectivement la partie réelle et la partie imaginaire de $n_k(i)$;

et où $\mathbf{M}_2$ est la matrice $2K$x$2K$ définie par :

$$\mathbf{M}_2=\begin{bmatrix} M_{11}^R & M_{11}^I & \cdots & M_{1K}^R & M_{1K}^I \\ -M_{11}^I & M_{11}^R & \cdots & -M_{1K}^I & M_{1K}^R \\ \vdots & \vdots & & \vdots & \vdots \\ M_{K1}^R & M_{K1}^I & \cdots & M_{KK}^R & M_{KK}^I \\ -M_{K1}^I & M_{K1}^R & \cdots & -M_{KK}^I & M_{KK}^R \end{bmatrix} \qquad (17)$$

avec $M_{\ell k}=M_{\ell k}^R+j.M_{\ell k}^I$ où l'indice $i$ a été omis pour simplifier les notations.

Les composantes du vecteur $\mathbf{d}_2(i)$ appartenant à un alphabet fini de cardinal A. Par exemple, les composantes $d_k^R(i)$ et $d_k^I(i)$ pourront être des symboles de modulation PAM d'ordre M. Dans ce cas.

$$d_k^R(i)\in\{-M+1,-M+3,\ldots,M-3,M-1\} \text{ et} \qquad (18)$$

$$d_k^I(i)\in\{-M+1,-M+3,\ldots,M-3,M-1\} \qquad (19)$$

Si l'on effectue la transformation :

$d_k'^R(i)=\frac{1}{2}\left(d_k^R(i)+M-1\right)$ et $d_k'^I(i)=\frac{1}{2}\left(d_k^I(i)+M-1\right)$ soit encore de manière vectorielle :

$$\mathbf{d}'_2(i)=\frac{1}{2}\left(\mathbf{d}_2(i)+\mathbf{v}_M\right) \qquad (20)$$

où $\mathbf{v}M=(M\text{-}1,M\text{-}1,..,M\text{-}1)$

les composantes $d_k'^R(i)$ et $d_k'^I(i)$ sont des éléments de $\mathbf{Z}$ et par suite $\mathbf{d}'_2(i)$ est un vecteur de $\mathbf{Z}^{2K}$.

De manière générale, l'invention peut s'appliquer à tout alphabet fini de symboles tel qu'il existe une transformation affine transformant les composantes $d_k^R(i)$ et $d_k^I(i)$ en des éléments de $\mathbf{Z}$.

De manière similaire, on effectue la transformation correspondante sur $\mathbf{y}_2(i)$, c'est-à-dire :

$$\mathbf{y}'_2(i)=\frac{1}{2}\left(\mathbf{y}_2(i)+\mathbf{v}_M\mathbf{M}_2\right) \qquad (21)$$

Moyennant cette transformation, que nous supposerons implicite dans la suite, le vecteur $\mathbf{d}_2(i)\mathbf{M}_2(i)$ appartient alors à un réseau de points $\Lambda_2$ tel que défini par la relation (15) avec $\mathbf{G}=\mathbf{M}_2(i)$. Le vecteur $\mathbf{y}_2(i)$ peut donc être considéré comme un point du réseau $\Lambda_2$ corrompu par un bruit $\mathbf{n}_2(i)$.

Si l'on suppose que les composantes du vecteur de bruit $\mathbf{n_2}(i)$ sont des variables aléatoires indépendantes gaussiennes centrées, le problème de la détection au sens du maximum de vraisemblance des symboles émis par les différents utilisateurs peut se traduire comme la recherche du point $\mathbf{z_2}$ du réseau $\Lambda_2$ tel que sa distance à $\mathbf{y_2}(i)$ soit minimale.

En réalité, il résulte de l'expression (14) que les composantes de bruit sont corrélées puisque, si l'on note $\eta_2$ le vecteur réel de bruit reçu correspondant au vecteur complexe $\eta$, $\mathbf{C}_{U2}$ la matrice obtenue à partir de $\mathbf{C}_U$ selon la transformation donnée en (17), $\mathbf{R_2}$ la matrice d'autocorrélation du vecteur de bruit $\mathbf{n_2}(i)$

$$\mathbf{R}_2 = E(\mathbf{n}_2^T \mathbf{n}_2) = E(\mathbf{C}_{U2} \boldsymbol{\eta}_2^T \boldsymbol{\eta}_2 \mathbf{C}_{U2}^T) = \mathbf{C}_{U2} E(\boldsymbol{\eta}_2^T \boldsymbol{\eta}_2) \mathbf{C}_{U2}^T = N_0 . \mathbf{C}_{U2} \mathbf{C}_{U2}^T \tag{22}$$

pour la liaison montante et,

$$\mathbf{R}_2 = E(\mathbf{n}_2^T \mathbf{n}_2) = E(\mathbf{C}_{D2} \boldsymbol{\eta}_2^T \boldsymbol{\eta}_2 \mathbf{C}_{D2}^T) = \mathbf{C}_{D2} E(\boldsymbol{\eta}_2^T \boldsymbol{\eta}_2) \mathbf{C}_{D2}^T = N_0 . \mathbf{C}_{D2} \mathbf{C}_{D2}^T \tag{23}$$

pour la liaison descendante.

Afin de se ramener au cas décorrélé on effectue préalablement au décodage une opération de blanchiment du bruit.

La matrice d'autocorrélation $\mathbf{R_2}$ est symétrique définie positive et peut donc faire l'objet d'une factorisation de Cholesky :

$$\mathbf{R}_2 = \mathbf{W}_2 \mathbf{W}_2^T \tag{24}$$

où $W_2$ est une matrice triangulaire inférieure de taille $2K\text{x}2K$.
On définit un vecteur d'observation blanchie :

$$\tilde{\mathbf{y}}_2(i) = \mathbf{y}_2(i) \mathbf{W}_2^{T^{-1}} \tag{25}$$

ainsi qu'un nouveau réseau de points $\Omega_2$ constitué des vecteurs de composantes $\left(\tilde{x}_1^R(i), \tilde{x}_1^I(i), \ldots, \tilde{x}_K^R(i), \tilde{x}_K^I(i)\right)$ avec $\tilde{\mathbf{x}}_2(i) = \mathbf{x}_2(i) \mathbf{W}_2^{T^{-1}}$ où $\mathbf{x}_2(i)$ est un vecteur de composantes $\left(x_1^R(i), x_1^I(i), \ldots, x_K^R(i), x_K^I(i)\right)$ appartenant à $\Lambda_2$.

On peut facilement montrer, qu'après blanchiment, la matrice de covariance du bruit filtré $\mathbf{n}_2(i) \mathbf{W}_2^{T^{-1}}$ est égale à $N_0 \mathbf{I}_{2K}$ où $\mathbf{I}_{2K}$ est la matrice identité de dimension $2K$. Le décodage comprend donc une première étape de blanchiment du vecteur d'observation suivie d'une étape de recherche du plus proche voisin dans le réseau de points $\Omega_2$.

Il importe de noter que la relation (23) (liaison descendante) se simplifie lorsque l'on utilise des séquences d'étalement à valeurs réelles.

En effet dans ce cas, la relation (13) peut s'écrire:

$$\mathbf{M}(i) = \mathbf{A}\mathbf{C}_D(i)\mathbf{C}_D^H(i) = \mathbf{A}\mathbf{C}(i)\mathbf{H}(i)\mathbf{H}^H(i)\mathbf{C}^H(i) = \mathbf{A}\mathbf{C}(i)\left|\mathbf{H}(i)\right|^2 \mathbf{C}^H(i) \tag{26}$$

où $|\mathbf{H}(i)|^2 = \mathbf{Diag}(|h_1(i)|^2, \ldots, |h_L(i)|^2)$ est une matrice réelle. Par suite la matrice génératrice $\mathbf{M}(i)$ du réseau est elle-même une matrice réelle et l'on peut modéliser le système par un réseau de points réel $\Lambda$ de dimension $K$ et de matrice génératrice $\mathbf{M}(i)$ :

$$\mathbf{y}^R(i) = \mathbf{d}^R(i)\mathbf{M}(i) + \mathbf{n}^R(i) \tag{27}$$

$$\mathbf{y}^{I}(i)=\mathbf{d}^{I}(i)\mathbf{M}(i)+\mathbf{n}^{I}(i) \tag{28}$$

où $\mathbf{y}^{R}(i),\mathbf{d}^{R}(i),\mathbf{n}^{R}(i)$ (resp. $\mathbf{y}^{I}(i),\mathbf{d}^{I}(i),\mathbf{n}^{I}(i)$) sont les vecteurs constitué des parties réelles (resp. des parties imaginaires) des composantes de $\mathbf{y}(i)$, $\mathbf{b}(i)$, $\mathbf{n}(i)$. Les vecteurs d'observation $\mathbf{y}^{R}(i)$ et $\mathbf{y}^{I}(i)$ appartiennent à $\mathbf{R}^{K}$. On peut montrer que les vecteurs de bruit $\mathbf{n}^{R}(i)$ et $\mathbf{n}^{I}(i)$ ont tous deux pour matrice de covariance $\mathbf{R}(i)=\mathbf{C}_{D}(i)\mathbf{C}_{D}^{T}(i)N_0$.

$\mathbf{R}(i)$ étant une matrice symétrique définie positive on peut, comme ci-dessus, la factoriser selon une décomposition de Cholesky : $\mathbf{R} = \mathbf{W}\mathbf{W}^{T}$ où $\mathbf{W}$ est une matrice réelle triangulaire inférieure de taille *KxK*. Afin de décorréler les composantes de bruit, les vecteurs d'observation réels $\mathbf{y}^{R}(i)$ et $\mathbf{y}^{I}(i)$ sont tout d'abord soumis à une opération de blanchiment :

$$\widetilde{\mathbf{y}}^{R}(i)=\mathbf{y}^{R}(i)\mathbf{W}^{T-1} \tag{29}$$

$$\widetilde{\mathbf{y}}^{I}(i)=\mathbf{y}^{I}(i)\mathbf{W}^{T-1} \tag{30}$$

Dans un deuxième temps, on recherche les plus proches voisins des vecteurs $\widetilde{\mathbf{y}}^{R}(i)$ et $\widetilde{\mathbf{y}}^{I}(i)$ appartenant au réseau de points $\Omega$ constitué des vecteurs $\widetilde{\mathbf{x}}(i)=\mathbf{x}(i)\mathbf{W}^{T-1}$ où $\mathbf{x}(i)$ appartient à $\Lambda$. On peut montrer facilement, qu'après blanchiment, la matrice de covariance des bruits filtrés $\mathbf{n}^{R}(i)\mathbf{W}^{T-1}$ est égale à $N_0\mathbf{I}_{K}$ où $\mathbf{I}_{K}$ est la matrice identité de dimension *K*.

On voit donc que dans le cas d'une liaison descendante avec signatures réelles, la méthode de décodage conduit à une recherche de deux plus proches voisins dans un réseau de dimension *K* alors que dans le cas général, complexe, le décodage nécessite une recherche dans un réseau de dimension *2K*.

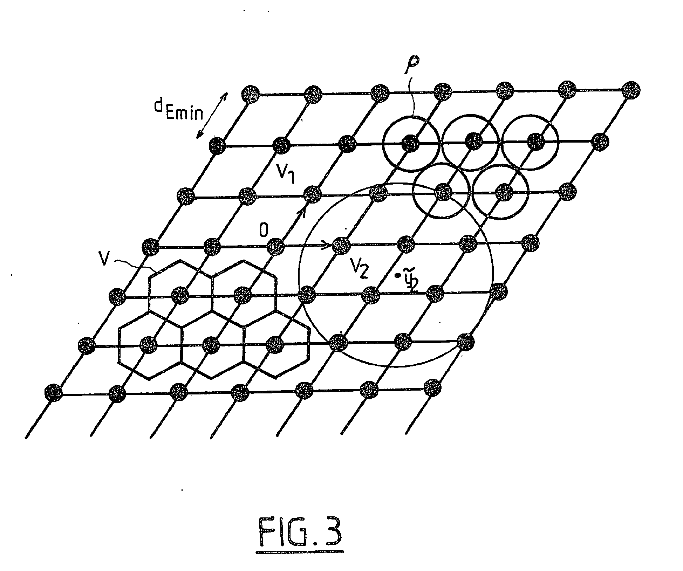

La Fig. 3 illustre schématiquement un réseau de points et la méthode de recherche du plus proche voisin d'un vecteur d'observation blanchie $\widetilde{\mathbf{y}}_2$ dans un réseau de dimension *2K* ou, dans le cas de signatures réelles, des vecteurs d'observation blanchis $\widetilde{\mathbf{y}}^{R}$, $\widetilde{\mathbf{y}}^{I}$ dans un réseau de dimension *K*. Nous traiterons ces deux cas avec le même formalisme et noterons par la suite $\kappa$ la taille du réseau.

Dans les deux cas le problème est de déterminer le point $\mathbf{x}$ du réseau le plus proche du vecteur reçu et blanchi $\widetilde{\mathbf{y}}$, ce qui revient à minimiser la métrique

$$m(\widetilde{\mathbf{y}}/\mathbf{x})=\sum_{i=1}^{\kappa}|\widetilde{y}_i-x_i|^2=\|\widetilde{\mathbf{y}}-\mathbf{x}\|^2 \tag{31}$$

où $\widetilde{\mathbf{y}}=\mathbf{x}+\eta$), $\eta=\{\eta_1,...,\eta_{\kappa}\}$ le vecteur de bruit et $\mathbf{x}=(x_1,...,x_{\kappa})$ un point appartenant au réseau. Le vecteur de bruit $\eta$ a des composantes réelles indépendantes suivant une distribution gaussienne de moyenne nulle et de variance $\sigma^2$. Soit $\mathbf{R}$ la matrice de covariance du vecteur de bruit

Alternativement, on notera que le vecteur $\mathbf{y}$ n'a pas besoin d'être blanchi si l'on utilise une métrique basée sur la matrice de covariance :

$$m(\mathbf{y}/\mathbf{x})=(\mathbf{y}-\mathbf{x})\mathbf{R}^{-1}(\mathbf{y}-\mathbf{x})^{T} \tag{31'}$$

On désignera par la suite, pour des raisons de simplification, $\mathbf{y}$ le vecteur d'observation blanchi ($\widetilde{\mathbf{y}}$) ou non et $\|.\|$ la métrique intervenant dans la relation (31) ou (31').

Les points du réseau $\{\mathbf{x} = \mathbf{b}\mathbf{G}\}$ sont obtenus à partir des vecteurs de données $\mathbf{b}=(b_1,...,b_{\kappa})$ dans lesquels les composantes $b_i$ appartiennent à l'anneau des entiers $\mathbf{Z}$. On note $\{\mathbf{v}_1,\mathbf{v}_2,...,\mathbf{v}_{\kappa}\}$ les lignes de la matrice $\mathbf{G}$. Par définition ces vecteurs forment une base du réseau.

L'ensemble des symboles émis est limité à un alphabet de taille finie $\mathbf{A}_{\kappa}\subset\mathbf{Z}^{\kappa}$ appelé constellation. Cette constellation est déterminée par les constellations de modulation utilisées par (ou pour) les $\kappa$ utilisateurs et le cardinal de l'alphabet $A_{\kappa}$ est le produit des cardinaux des différents alphabets de modulation. On supposera que les points complexes de chacune de ces constellations possèdent des valeurs réelles et des valeurs complexes régulièrement réparties .

Un décodage exhaustif nécessiterait une recherche du plus proche voisin dans la totalité de $\mathbf{A}_\kappa$. Le décodeur restreint avantageusement son calcul aux points qui sont situés à l'intérieur d'une zone de la constellation située autour du point reçu, préférentiellement à l'intérieur d'une sphère de rayon donné $\sqrt{C}$ centrée sur le point reçu comme représenté en Fig. 3. Seuls les points du réseau situés à une distance quadratique inférieure à $C$ du point reçu sont donc considérés pour la minimisation de la métrique (31).

En pratique, le décodeur effectue la minimisation suivante :

$$\min_{\mathbf{x}\in\Lambda}\|\mathbf{y}-\mathbf{x}\|=\min_{\mathbf{w}\in\mathbf{y}-\Lambda}\|\mathbf{w}\| \tag{32}$$

Pour ce faire, le décodeur recherche le plus petit vecteur $\mathbf{w}$ dans l'ensemble translaté $\mathbf{y} - \Lambda$. On peut exprimer les vecteurs $\mathbf{y}$ et $\mathbf{w}$ comme :

$$\mathbf{y}=\boldsymbol{\rho}\mathbf{G} \qquad \text{avec} \qquad \boldsymbol{\rho}=(\rho_1,...,\rho_\kappa)$$
$$\mathbf{w}=\boldsymbol{\rho}\mathbf{G} \qquad \text{avec} \qquad \boldsymbol{\xi}=(\xi_1,...,\xi_\kappa) \tag{33}$$

Il est important de noter que $\rho$ et $\xi$ sont des vecteurs réels. Comme $\mathbf{w} = \mathbf{y} - \mathbf{x}$ où $\mathbf{x}$ appartient au réseau $\Lambda$, on a la relation $\xi_i = \rho_i - b_i$ pour $i=1,...,\kappa$ avec

$$\mathbf{w}=\sum_{i=1}^{\kappa}\xi_i\mathbf{v}_i$$

Le vecteur $\mathbf{w}$ est un point du réseau dont les coordonnées $\xi_i$ sont exprimées dans le repère translaté centré sur le point reçu $\mathbf{y}$. Le vecteur $\mathbf{w}$ appartient à une sphère de rayon quadratique $C$ centrée en $\mathbf{0}$ si :

$$\|\mathbf{w}\|^2=Q(\xi)=\xi\mathbf{G}\mathbf{G}^T\xi^T\leq C \tag{34}$$

Dans le nouveau système de coordonnées défini par $\xi$, la sphère de rayon quadratique $C$ centrée en $\mathbf{y}$ est donc transformée en une ellipse centrée à l'origine. La factorisation de Cholesky de la matrice de Gram $\Gamma=\mathbf{G}\mathbf{G}^T$ donne $\Gamma=\Delta\Delta^T$, où $\Delta$ est une matrice triangulaire inférieure d'éléments $\delta_{ij}$.

Il faut noter que si le vecteur $\mathbf{y}$ a été blanchi, il n'y a pas lieu d'effectuer cette factorisation car la matrice génératrice de $\Omega_2$ (respectivement de $\Omega$) vaut $\mathbf{AW_2}$ (respectivement $\mathbf{AW}$) et est donc déjà triangulaire inférieure.

Toutefois, dans le cas où l'on n'a pas procédé au blanchiment préalable et donc où la décomposition de Cholesky est nécessaire :

$$Q(\xi)=\xi\Delta\Delta^T\xi^T=\|\Delta^T\xi^T\|^2=\sum_{i=1}^{\kappa}\left(\delta_{ii}\xi_i+\sum_{j=i+1}^{\kappa}\delta_{ji}\xi_j\right)^2\leq C \tag{35}$$

En posant

$$q_{ii}=\delta_{ii}^2 \text{ pour } i=1,...,\kappa$$

**10**

$$q_{ij}=\frac{\delta_{ij}}{\delta_{jj}}\text{ pour } j=1,\ldots,\kappa; i=j+1,\ldots,\kappa$$

on obtient

$$Q(\xi)=\sum_{i=1}^{\kappa}q_{ii}\left(\xi_i+\sum_{j=i+1}^{\kappa}q_{ji}\xi_j\right)^2 \tag{36}$$

En s'intéressant tout d'abord à la plage de variations possibles de $\xi_\kappa$, puis en rajoutant une à une les composantes, on obtient les $\kappa$ inégalités suivantes, qui définissent tous les points à l'intérieur de l'ellipse :

$$q_{\kappa\kappa}\xi_\kappa^2\leq C$$
$$q_{\kappa-1,\kappa-1}\left(\xi_{\kappa-1}+q_{\kappa,\kappa-1}\xi_\kappa\right)^2+q_{\kappa\kappa}\xi_\kappa^2\leq C \tag{37}$$
$$\forall \ell\in\{1;\kappa\}, \sum_{i=\ell}^{\kappa}q_{ii}\left(\xi_i+\sum_{j=i+1}^{\kappa}q_{ji}\xi_j\right)^2\leq C$$

On peut montrer que les inégalités (37) imposent aux composantes entières de **b** de satisfaire à :

$$\left\lceil -\sqrt{\frac{C}{q_{\kappa\kappa}}}+\rho_\kappa\right\rceil\leq b_\kappa\leq\left\lfloor\sqrt{\frac{C}{q_{\kappa\kappa}}}+\rho_\kappa\right\rfloor$$

$$\left\lceil -\sqrt{\frac{C-q_{\kappa\kappa}\xi_\kappa^2}{q_{\kappa-1,\kappa-1}}}+\rho_{\kappa-1}+q_{\kappa,\kappa-1}\xi_\kappa\right\rceil\leq b_{\kappa-1}\leq\left\lfloor -\sqrt{\frac{C-q_{\kappa\kappa}\xi_\kappa^2}{q_{\kappa-1,\kappa-1}}}+\rho_{\kappa-1}+q_{\kappa,\kappa-1}\xi_\kappa\right\rfloor$$

$$\left\lceil -\sqrt{\frac{1}{q_{ii}}\left(C-\sum_{\ell=i+1}^{\kappa}q_{\ell\ell}\left(\xi_\ell+\sum_{j=\ell+1}^{\kappa}q_{j\ell}\xi_j\right)^2\right)}+\rho_i+\sum_{j=i+1}^{\kappa}q_{ji}\xi_j\right\rceil\leq b_i \tag{38}$$

$$b_i\leq\left\lfloor\sqrt{\frac{1}{q_{ii}}\left(C-\sum_{\ell=i+1}^{\kappa}q_{\ell\ell}\left(\xi_\ell+\sum_{j=\ell+1}^{\kappa}q_{j\ell}\xi_j\right)^2\right)}+\rho_i+\sum_{j=i+1}^{\kappa}q_{ji}\xi_j\right\rfloor$$

où $\lceil x\rceil$ est le plus petit entier supérieur au réel $x$ et $\lfloor x\rfloor$ est le plus grand entier inférieur au réel $x$.

Le décodeur possède $\kappa$ compteurs internes, à savoir un compteur par dimension, chaque compteur comptant entre une borne inférieure et supérieure comme indiqué en (38), étant entendu qu'à chaque compteur est associé un couple de bornes particulier. En pratique, ces bornes peuvent être mises à jour de manière récursive.

Avantageusement, on liste toutes les valeurs du vecteur **b** pour lesquelles le point correspondant du réseau **x** = **bG** est situé en deçà de la distance quadratique $C$ du point reçu. Les points du réseau situés en dehors de la sphère considérée ne sont pas testés. On voit donc que la complexité de décodage ne dépend pas de la taille de la constellation du réseau.

De plus, la recherche à l'intérieur de la sphère peut être considérablement accélérée en mettant à jour le rayon $\sqrt{C}$ avec la dernière norme euclidienne calculée $\|\mathbf{w}\|$. Finalement, on sélectionne comme meilleur point **x** celui associé à la plus petite norme $\|\mathbf{w}\|$.

Le rayon de recherche $\sqrt{C}$ doit être choisi de manière appropriée. En effet, le nombre de points du réseau situés à l'intérieur de la sphère de décodage augmente avec $C$. C'est pourquoi le choix d'une grande valeur de $C$ pénalise l'algorithme de décodage tandis que la sphère de recherche peut être vide si $C$ est trop faible.

De manière à être sûr que le décodeur trouve au moins un point du réseau, on choisit avantageusement un rayon de recherche supérieur au rayon de recouvrement du réseau. On peut par exemple le prendre égal à la borne supérieure de Rogers :

$$\sqrt{C}^{\kappa} = (\kappa \log \kappa + \kappa \log \log \kappa + 5\kappa) \times \frac{|\det(\mathbf{G})|}{V_{\kappa}} \tag{39}$$

où $V_{\kappa}$ est le volume d'une sphère de rayon unité dans l'espace réel $\mathbf{R}^{\kappa}$.

Il faut noter que le décodeur opère sur un réseau de points et non sur une constellation de modulation. Quand la constellation employée sur une dimension est une constellation PAM d'ordre $M$, les coordonnées entières du point doivent être comprises entre 0 et $M$-1. Plutôt que de tester une fois un point trouvé, si ce point appartient bien à la constellation, on peut avantageusement ajuster les bornes de recherche de (38) pour qu'elles restent comprises entre 0 et $M$-1. On aura ainsi l'assurance que tous les points trouvés sont dans la constellation et que les compteurs ne parcourent inutilement des points qui, de toutes façons, n'appartiennent pas à la constellation. Cette pré-sélection permet d'accélérer considérablement l'algorithme de décodage.

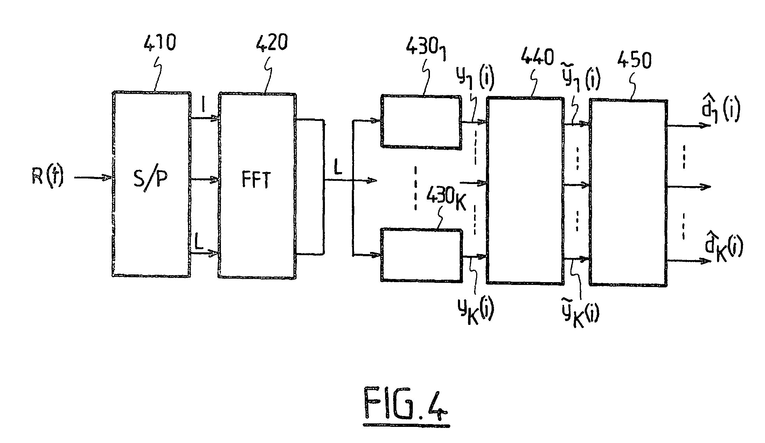

La Fig. 4 illustre schématiquement la structure d'un dispositif de détection multi-utilisateur selon un mode de réalisation de l'invention. Le signal reçu est tout d'abord échantillonné à la fréquence « chip » et les échantillons sont parallélisés par un convertisseur série / parallèle 410. Les vecteurs de $L$ échantillons obtenus sont transformés en 420 par une FFT dans le domaine temporel. Les $L$ échantillons temporels sont transmis à une batterie de $K$ filtres $430_1$,.., $430_K$ adaptés à la signature et au canal de transmission de chaque utilisateur. Ces filtres adaptés permettent d'obtenir le vecteur complexe $\mathbf{y}(i)$ d'après la relation (9) ou (10) selon le cas d'une liaison montante ou descendante. Les composantes de $\mathbf{y}(i)$ subissent un blanchiment spectral en 440 afin de décorréler les échantillons de bruit. Le vecteur blanchi, $\tilde{\mathbf{y}}(i)$, éventuellement après transformation du type de celle donnée en (21) (non représentée), fait l'objet d'un décodage de maximum de vraisemblance en 450 par recherche du point du réseau $\Lambda_2$ le plus proche de l'extrémité du vecteur $\tilde{\mathbf{y}}(i)$. La sortie du module de décodage 450 (éventuellement après transformation inverse à celle susmentionnée, non représentée) est un vecteur $\hat{\mathbf{d}}(i)$ dont les composantes sont les symboles estimés transmis par les différents utilisateurs. Dans le cadre d'une liaison descendante utilisant des signatures réelles, le module 450 effectue deux recherches de plus proche voisin dans un réseau de points $\Lambda$ de dimension $K$, comme on l'a vu plus haut.

Au lieu de fournir les symboles de constellation estimés, le récepteur peut être adapté pour fournir des de symboles souples. Dans ce cas, la recherche à l'intérieur de la sphère de décodage ne se limite plus au plus proche voisin mais est étendue à une pluralité des plus proches voisins du point relatif au signal reçu.

Plus précisément, on associe à chaque point voisin $m=1,..,m_{max}$ une probabilité a posteriori $p^m$, probabilité que le vecteur $d^m(i)$ défini par ce point aient été émis, étant donné l'observation $\mathbf{y}(i)$. On définit un symbole souple d'un utilisateur $k$ comme le $M_k$-uplet $(\pi_1,..., \pi_{Mk})$ où $M_k$ est le cardinal de la constellation de modulation de l'utilisateur $k$ et où $\pi_j$ est la probabilité que le symbole $s_j$ ait été émis. On a :

$$\pi_J = p(s_J / \mathbf{y}) = \sum_{m=1}^{m_{max}} p(s_J / d^m) . p^m \tag{40}$$

Les probabilités a posteriori $p^m$ pourront par exemple être exprimées par :

$p^m = \dfrac{e^{-\lambda_m^2}}{\displaystyle\sum_{n=1}^{m_{max}} e^{-\lambda_n^2}}$  où $\lambda_m$ est la distance séparant le point reçu du point correspondant au vecteur $d^m(i)$.

Bien que certains modes de réalisation de l'invention aient été représentés sous forme de modules fonctionnels, il est clair que le dispositif selon l'invention peut être réalisé sous forme d'un processeur programmé pour exécuter les différentes fonctions représentées ou sous la forme d'une pluralité de processeurs dédiés aptes à mettre en oeuvre une ou plusieurs de ces fonctions.

**Revendications**

1. Méthode de détection d'une pluralité de symboles ($\mathbf{d}_k(i)$) transmis par ou pour une pluralité $K$ d'utilisateurs, chaque symbole appartenant à une constellation de modulation et faisant l'objet d'un étalement spectral avant d'être modulé sur une pluralité $L$ de porteuses, ladite méthode comprenant une étape de démodulation (420) et une étape de désétalement spectral (430) du signal reçu ($\mathbf{r}(i)$) pour fournir un vecteur ($\mathbf{y}_2(i)$, $\tilde{y}_2(i)$) caractéristique dudit signal, **caractérisée en ce qu'**elle comprend une étape (450) de recherche, à l'intérieur d'un réseau de points ($\Lambda_2,\Omega_2$) généré par les symboles desdites constellations de modulation, d'au moins le plus proche voisin dudit vecteur.

2. Méthode de détection selon la revendication 1, **caractérisée en ce que** ladite étape de recherche est limitée à un ensemble de points du réseau appartenant à une zone prédéterminée autour dudit vecteur caractéristique.

3. Méthode de détection selon la revendication 1, **caractérisée en ce que** ladite étape de recherche est limitée à un ensemble de points du réseau appartenant à une zone prédéterminée autour de l'origine dudit réseau.

4. Méthode de détection selon la revendication 2 ou 3, **caractérisée en ce que** ladite zone prédéterminée est une sphère.

5. Méthode de détection selon l'une des revendications précédentes, **caractérisée en ce que** les symboles transmis ayant été étalés spectralement au moyen de séquences à valeurs réelles, ledit vecteur caractéristique est décomposé en un premier vecteur à composantes réelles et un second vecteur à composantes réelles et que ladite étape de recherche consiste à déterminer le plus proche voisin dudit premier vecteur et dudit second vecteur à l'intérieur d'un réseau ($\Lambda,\Omega$) de points à coordonnées réelles de dimension $K$.

6. Méthode de détection selon l'une des revendications 1 à 4, **caractérisée en ce que**, ledit vecteur caractéristique étant considéré comme un vecteur à composantes réelles de taille $2.K$, ladite étape de recherche consiste à déterminer le plus proche voisin à l'intérieur d'un réseau ($\Lambda_2,\Omega_2$) de points à coordonnées réelles de dimension $2.K$.

7. Méthode de détection selon la revendication 6, **caractérisée en ce que** ladite étape de recherche est effectuée sur une pluralité de composantes réelles dudit vecteur caractéristique, la recherche étant limitée pour chacune desdites composantes à un intervalle défini par une borne inférieure et une borne supérieure, lesdites bornes étant choisies de manière à ce que ledit intervalle ne comprenne pas des points relatifs à des symboles ne pouvant appartenir à la constellation de modulation.

8. Méthode de détection selon l'une des revendications précédentes, **caractérisée en ce que** l'étape de démodulation spectrale est suivie d'une étape de désétalement et égalisation des symboles obtenus par démodulation du signal reçu aux différentes porteuses, ladite fournissant un vecteur ($\mathbf{y}_2(i)$) de symboles égalisés pour les différents utilisateurs.

9. Méthode de détection selon la revendication 8, **caractérisée en ce que** ledit vecteur caractéristique ($\tilde{y}_2(i)$) est obtenu à partir du vecteur de symboles égalisés au moyen d'un traitement matriciel (440) visant à substantiellement décorréler les différentes composantes de bruit de ce dernier.

10. Méthode de détection selon l'une des revendications précédentes, **caractérisée en ce que** ladite étape de recherche est étendue à celle d'un ensemble de points voisins dudit vecteur caractéristique et que les symboles transmis sont estimés de manière souple à partir des symboles générant lesdits points voisins et des distances séparant lesdits points voisins du point reçu.

11. Dispositif de détection d'une pluralité de symboles ($\mathbf{d}_k(i)$) transmis par ou pour une pluralité $K$ d'utilisateurs, chaque symbole appartenant à une constellation de modulation et faisant l'objet d'un étalement spectral avant d'être modulé sur une pluralité $L$ de porteuses, le dispositif comprenant des moyens pour mettre en oeuvre la méthode revendiquée selon l'une des revendications précédentes.

12. Récepteur pour système de télécommunication mobile MC-CDMA comprenant un dispositif de détection selon la revendication 11.

**Claims**

1. Method of detecting a plurality of symbols ($\mathbf{d}_k(i)$) transmitted by or for a plurality $K$ of users, each symbol belonging to a modulation constellation and being the subject of a spectral spreading before being modulated on a plurality $L$ of carriers, the said method comprising a step of demodulation (420) and a step of spectral despreading (430) of the received signal ($\mathbf{r}(i)$) in order to supply a vector ($y_2(i)$, $\tilde{\mathbf{y}}_2(i)$) characteristic of the said signal, **characterised in that** it comprises a step (450) of searching, within a network of points ($\Lambda_2, \Omega_2$) generated by the symbols of the said modulation constellations, for at least the closest neighbour of the said vector.

2. Detection method according to Claim 1, **characterised in that** the said search step is limited to a set of points of the network belonging to a predetermined zone around the said characteristic vector.

3. Detection method according to Claim 1, **characterised in that** the said search step is limited to a set of points of the network belonging to a predetermined zone around the origin of said network.

4. Detection method according to Claim 2 or 3, **characterised in that** the said predetermined zone is a sphere.

5. Detection method according to one of the preceding claims, **characterised in that** the transmitted symbols having been spread spectrally by means of sequences with real values, the said characteristic vector is decomposed into a first vector with real components and a second vector with real components and **in that** the said search step comprises determining the closest neighbour of the said first vector and of the said second vector within a network ($\Lambda, \Omega$) of points with real coordinates of dimension $K$.

6. Detection method according to one of Claims 1 to 4, **characterised in that**, the said characteristic vector being considered to be a vector with real components of size $2.K$, the said search step comprises determining the closest neighbour within a network ($\Lambda_2, \Omega_2$) of points with real coordinates of dimension $2.K$.

7. Detection method according to Claim 6, **characterised in that** the said search step is effected on a plurality of real components of the said characteristic vector, the search being limited for each of the said components to an interval defined by a lower boundary and an upper boundary, the said boundaries being chosen so that the said interval does not include points relating to symbols which cannot belong to the modulation constellation.

8. Detection method according to one of the preceding claims, **characterised in that** the spectral demodulation step is followed by a step of despreading and equalisation of the symbols obtained by demodulation of the signal received at the different carriers, the latter supplying a vector ($\mathbf{y}_2(i)$) of symbols equalised for the different users.

9. Detection method according to Claim 8, **characterised in that** the said characteristic vector ($\tilde{\mathbf{y}}_2(i)$) is obtained from the vector of symbols equalised by means of a matrix-type processing (440) aimed at substantially decorrelating the different noise components thereof.

10. Detection method according to one of the preceding claims, **characterised in that** the said search step is extended to that of a set of adjacent points to the said characteristic vector and **in that** the transmitted symbols are estimated flexibly from the symbols generating the said adjacent points and the distances separating the said adjacent points from the received point.

11. Device for detecting a plurality of symbols ($\mathbf{d}_k(i)$) transmitted by or for a plurality $K$ of users, each symbol belonging to a modulation constellation and being the subject of a spectral spreading before being modulated on a plurality $L$ of carriers, the device comprising means for implementing the method claimed according to one of the preceding claims.

12. Receiver for an MC-CDMA mobile telecommunication system comprising a detection device according to Claim 11.

**Patentansprüche**

1. Verfahren zum Erfassen einer Vielzahl von Symbolen ($d_k(i)$), die von oder zu einer Vielzahl K von Benutzern übertragen werden, wobei jedes Symbol zu einer Modulationskonstellation gehört und Gegenstand einer Spektralerweiterung ist, bevor es auf eine Vielzahl L von Trägerfrequenzen moduliert wird, wobei das Verfahren einen Schritt zur Demodulation (420) und einen Schritt zur Spektralverengung (430) des empfangenen Signals (r(i)) umfasst, um einen Vektor ($y_2$(i), ($y_2$(i)) zu liefern, der für das Signal charakteristisch ist, **dadurch gekennzeichnet, dass** sie einen Schritt (450) zum Suchen mindestens des nächsten Nachbarn des Vektors im Inneren eines Netzes von Punkten ($\Lambda_2$, $\Omega_2$), das von den Symbolen der Modulationskonstellationen erzeugt wird, umfasst.

2. Verfahren zum Erfassen nach Anspruch 1, **dadurch gekennzeichnet, dass** der Schritt zum Suchen auf eine Gesamtheit von Punkten des Netzes begrenzt ist, die zu einer vorbestimmten Zone um den charakteristischen Vektor gehört.

3. Verfahren zum Erfassen nach Anspruch 1, **dadurch gekennzeichnet, dass** der Schritt zum Suchen auf eine Gesamtheit von Punkten des Netzes begrenzt ist, die zu einer vorbestimmten Zone um den Ursprung des Netzes gehört.

4. Verfahren zum Erfassen nach Anspruch 2 oder 3, **dadurch gekennzeichnet, dass** die vorbestimmte Zone eine Kugel ist.

5. Verfahren zum Erfassen nach einem der vorangehenden Ansprüche, **dadurch gekennzeichnet, dass**, wenn die übertragenen Symbole mit Hilfe von Sequenzen mit realen Werten spektral erweitert wurden, der charakteristische Vektor in einen ersten Vektor mit realen Komponenten und einen zweiten Vektor mit realen Komponenten zerlegt wird, und dass der Schritt zum Suchen darin besteht, den nächsten Nachbarn des ersten Vektors und des zweiten Vektors in einem Netz von Punkten ($\Lambda$, $\Omega$) mit realen Koordinaten der Dimension K zu bestimmen.

6. Verfahren zum Erfassen nach einem der Ansprüche 1 bis 4, **dadurch gekennzeichnet, dass**, wenn der charakteristische Vektor als ein Vektor mit realen Komponenten der Größe 2.K betrachtet wird, der Schritt zum Suchen darin besteht, den nächsten Nachbarn in einem Netz von Punkten ($\Lambda_2$,$\Omega_2$) mit realen Koordinaten der Dimension 2.K zu bestimmen.

7. Verfahren zum Erfassen nach Anspruch 6, **dadurch gekennzeichnet, dass** der Schritt zum Suchen an einer Vielzahl von realen Komponenten des charakteristischen Vektors erfolgt, wobei die Suche für jede der Komponenten auf einen Zwischenraum begrenzt ist, der von einer unteren Grenze und einer oberen Grenze definiert ist, wobei die Grenzen derart gewählt werden, dass der Zwischenraum keine Punkte umfasst, die sich auf Symbole beziehen, die nicht zu der Modulationskonstellation gehören können.

8. Verfahren zum Erfassen nach einem der vorangehenden Ansprüche, **dadurch gekennzeichnet, dass** dem Schritt zur spektralen Demodulation ein Schritt zur Verengung und zur Glättung der durch Demodulation des mit den verschiedenen Trägerfrequenzen empfangenen Signals erhaltenen Symbole folgt, wobei ein Vektor (($y_2$(i)) von geglätteten Symbolen zu den verschiedenen Benutzern geliefert wird.

9. Verfahren zum Erfassen nach Anspruch 8, **dadurch gekennzeichnet, dass** der charakteristische Vektor ($y_2$(i)) aus dem Vektor der geglätteten Symbole mit Hilfe einer Matrixverarbeitung (440) erhalten wird, die im Wesentlichen die verschiedenen Rauschkomponenten dieses letztgenannten dekorrelieren soll.

10. Verfahren zum Erfassen nach einem der vorangehenden Ansprüche, **dadurch gekennzeichnet, dass** der Schritt zum Suchen auf denjenigen einer Gesamtheit von benachbarten Punkten des charakteristischen Vektors erweitert wird und dass die übertragenen Symbole aus den Symbolen, die die benachbarten Punkte erzeugen, und den Abständen zwischen den benachbarten Punkten des empfangenen Punktes flexibel geschätzt werden.

11. Vorrichtung zum Erfassen einer Vielzahl von Symbolen ($d_k$(i)), die von oder zu einer Vielzahl K von Benutzern übertragen werden, wobei jedes Symbol zu einer Modulationskonstellation gehört und Gegenstand einer Spektralerweiterung ist, bevor es auf einer Vielzahl L von Trägerfrequenzen moduliert wird, wobei die Vorrichtung Mittel umfasst, um das beanspruchte Verfahren nach einem der vorangehenden Ansprüche einzusetzen.

12. Empfänger für ein mobiles MC-CDMA-Telekommunikationssystem, der eine Vorrichtung zum Erfassen nach Anspruch 11 aufweist.

EP 1 215 839 B1

$$d_{K(i)}$$

$$s_K(t-iT)$$

110

120

S/P

130

IFFT

140

P/S

150

$$s_K^{(t)}$$

<u>FIG.1</u>

$\widehat{d}_{K}(i)$

$240$ $\sum$

$q_{K,0} \cdot c^{*}_{K,0}$

$230_{0}$ $\otimes$

$230_{L-1}$ $\otimes$

$q_{K,L-1} \cdot c^{*}_{K,L-1}$

$220$ FFT

$210$ S/P

$R(t)$

FIG. 2

FIG.3

FIG.4